# EUROPEAN PATENT SPECIFICATION

(11) **EP 2 801 898 B1**
(45) Date of publication and mention of the grant of the patent: **06.07.2016**
(21) Application number: 14001572.8
(22) Date of filing: 05.05.2014
(51) Int. Cl.: G06F 3/0488

(54) **Quick Time-Related Data Entry**
Schnelle, zeitbezogene Dateneingabe
Saisie rapide de données relatives au temps

(30) Priority: 06.05.2013 US 201313887763
(43) Date of publication of application: 12.11.2014
(73) Proprietor: SAP SE, 69190 Walldorf (DE)
(72) Inventor: Kongot, Aparna, 69190 Walldorf (DE)
(74) Representative: Müller-Boré & Partner Patentanwälte PartG mbB

(56) References cited:
- US-A1- 2006 242 596
- US-B1- 7 992 102

## Description

### BACKGROUND

Entry of time-related data is a common task in many applications. The data is entered either manually by typing the data into input fields or by selecting available data from a scrolling wheel mechanism. In the scrolling wheel mechanism, a scrolling wheel is provided for each input field (e.g., one for the hour selection and one for the minute selection). A user scrolls through the available values provided in the wheel for each input field and makes a selection from each of the wheels corresponding to the desired value.

Manually typing the data into the input fields requires much time to enter all of the data accurately. Most of this time delay is associated with finding and selecting the characters representing the desired data. The time needed to enter the data becomes significant on mobile devices that utilize a touch screen and rely on user gestures to select the desired characters.

While the scrolling wheel mechanism may reduce the amount of time and complexity to enter the data as compared to manually typing the data, the scrolling wheel mechanism can still require significant time to locate and select the data. Similar to manually typing the data, the gestures associated with locating and selecting the data significantly contribute to the delay. The delay is partially due to the scrolling wheel mechanism displaying only a few values in each of the scrolling wheels at any given time. Thus, if the value that the user is looking for is located at the end of the scrolling wheel, the user may need to make multiple scrolling command operations to display the desired value.

The delay is also increased when changes to already selected values need to be made. When the change is to be made, the user needs to again scroll away from the selected value and control the wheel movement until the desired value is located.

Another disadvantage of existing methods is that precise control of the input device (e.g., gestures on a touch screen) is needed on the part of the user to enter the correct values. This is a disadvantage of both manually typing the data and controlling the scrolling wheels to select the desired data.

US 7 992 102 B1 discloses a method and system for processing user information. A graphical user interface is provided to include a display region, a first bounded region circumferentially surrounding the display region, and a second bounded region circumferentially surrounding the first bounded region. The first bounded region may include one or more first-type graphical user interface elements with each of the first-type graphical user interface elements selectively mapped to one or more first-type display data. The second bounded region may include one or more second-type graphical user interface elements with each of the second-type graphical user interface elements selectively mapped to one or more second-type display data. A user input is received using the graphical user interface, and a result is generated based at least on a user activation of at least one of the first-type and second-type graphical user interface elements.

US 2006/242596 A1 relates to displaying a menu is within a graphical user interface. The menu includes a plurality of selectable menu items within the menu. One of the menu items includes a first region and a second region. The first region presents a static title for the menu item, and the second region includes text that is capable of scrolling. The text within the second region of the first menu item is scrolled in response to the first menu item being selected. For example, the selection may be made by hovering a pointer above the first menu item. The scrolling may then be paused when the pointer is moved away from above the first menu item.

### BRIEF DESCRIPTION OF THE DRAWINGS

The accompanying drawings illustrate the various embodiments and, together with the description, further serve to explain the principles of the embodiments and to enable one skilled in the pertinent art to make and use the embodiments.
FIG. 1 illustrates an example embodiment of a networked environment in which a client device connects to an application server via a network.
FIGS. 2A-2G illustrate a client device displaying a user interface for entering time-related data according to an embodiment of the present disclosure.
FIGS. 3A-3H illustrate a client device displaying a user interface for entering time-related data according to another embodiment of the present disclosure.
FIG. 4 illustrates a flow diagram of a method for entering time time-related data by a user according to an embodiment of the present disclosure.
FIGS. 5A-5C illustrate a client device displaying a user interface for entering time-related data according to another embodiment of the present disclosure.
FIG. 6 is a block diagram of an exemplary computer system that may be used with the embodiments of the present disclosure.

### DETAILED DESCRIPTION

Embodiments of the present disclosure provide systems and methods for entering time related data. The method may be performed on a mobile device including a touch screen display providing a touch enabled user interface. The method may include receiving instructions to generate a user interface for entering time-related data. A first set of time values may be displayed in the user interface in a plurality of rows, the displayed first set of time values may include all of the values in the first set of time values. A selection of one of the values from the first set of time values may be detected via a user input. In response to the selection of one of the values from the first set of time values, a second set of time values may be displayed in the user interface. A selection of one of the values from the second set of time values may be detected via a second user input. The selected value from the first set of time values and the selected value from the second set of time values may be stored in a memory.

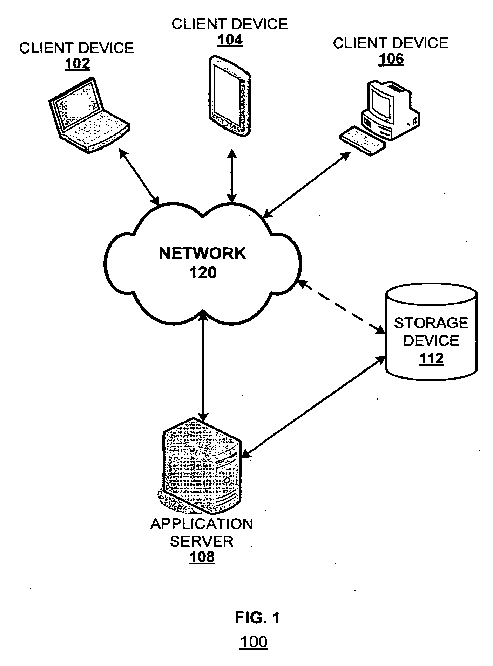

FIG. 1 is a block diagram illustrating an example embodiment of a networked environment 100 in which a client device 102, 104 or 106 connects to an application server 108 via a network 110. The client device 102, 104, or 106 may execute applications provided on the respective client device 102, 104 or 106 or may execute web-based applications provided by the application server 108 via the network 110. The applications executed by the client device 102, 104, or 106 may be used to receive time-related data entries from a user using the client device 102, 104, or 106. The time-related data entries may include repetitive entries into a database. The time-related data entries may be entered according to one or more of the embodiments discussed below.

The client device 102, 104, 106 may include, for example, a mobile device (e.g., mobile phone or a smart phone), a personal computer, a tablet, a terminal device, or a personal digital assistant (PDA). The client device 102, 104, 106 may include an input device (e.g., a touch screen, a touch pad, a mouse or a keyboard) to receive commands from a user.

The time-related data entered by the user may be stored on the client device 102, 104, or 106 or may be stored on a storage device 112 coupled to the client device 102, 104 or 106 via the network 110 or the application server 108. The storage device 112 may provide data to the client device 102, 104, or 106. The data may be provided to the client device 102, 104 or 106 from the storage device 112 in response to a request by the user or the application. The data provided to the client device 102, 104 or 106 may be associated with the time-related data entered by the user. The applications executed by the client device 102, 104, or 106 may be stored on the storage device 112.

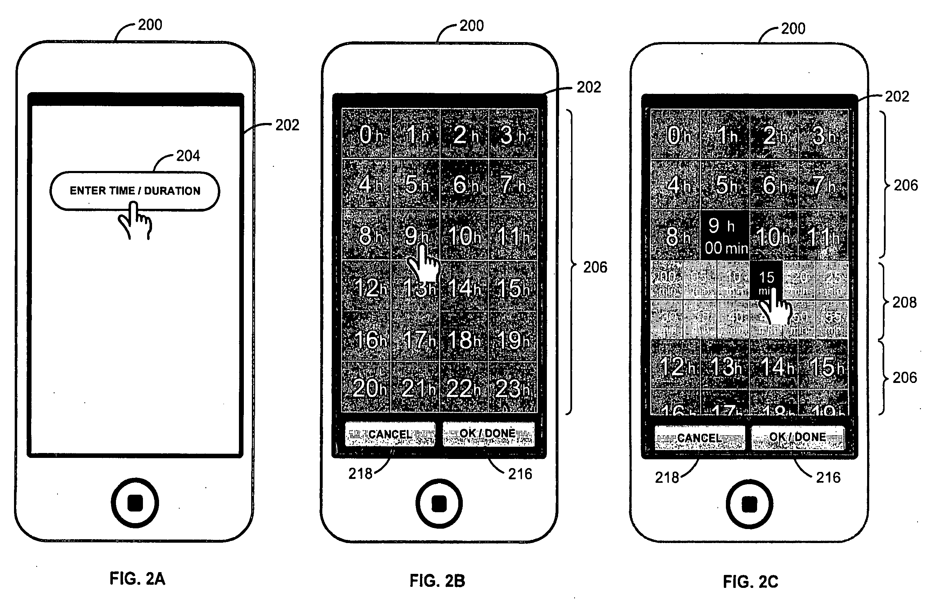

FIGS. 2A-2G illustrate a client device 200 displaying a user interface for entering time-related data according to an embodiment of the present disclosure. The user interface illustrated in FIGS. 2A-2E may be part of an application used to enter time or a time duration. The client device 200 may include a display 202 to display the user interface. The display 202 may be a touch-screen display capable of displaying a touch-enabled user interface, but is not so limited.

The user interface may display a first set of time values 206 in the display to allow the user to select one of the values from the first set of time values 206. All of the first set of time values 206 may be displayed at the same time within the display 202. After the value from the first set of time values 206 is selected, a second set of time values 208 may be displayed to allow the user to select one of the values from the second set of time values 208. All of the second set of time values 208 may be displayed within the display 202 at the same time. The second set of time values 208 may be displayed below the selected value from the first set of time value. The selected values from the first set of time values 206 and the second set of time values 208 may be provided to the application after the user finished making the selections.

The user interface shown in FIG. 2A-2G reduces the time needed by a user to search, enter and/or change the time-related data entries. The time may be reduced by allowing all of the available values (e.g., first set of time values 206 and/or the second set of time values 208) to be displayed to the user at the same time within the display 202. A tap gesture may be used to select the desired value from the displayed values. Unlike the scrolling wheel mechanism, the tap gesture does not require a high degree of precise control. The user interface shown in FIGS. 2A-2G allows for the desired time or duration to be selected by only using a tap gesture for each value (e.g., one tap gesture for the hour selection and one tap gesture for the minute selection).

The user interface may be activated in response to a command to enter time-related data. The command may be manually activated by a user selecting a start command 204 to enter the data or may be automatically activated in response to an operation performed by the application (e.g., when the application finishes processing a preceding data entry).

Once the user interface is activated, the user interface may display a first set of time values 206. The first set of time values 206 may correspond to hour values. The hour values may be displayed using the standard 12 hour clock system or with the 24 hour clock system. If the 12 hour clock system is used, designators "am" and "pm" could be used to distinguish between hour values for before midday and after midday. The user interface may display all of the available first set time values 206 on the display 202 at the same time (e.g., all 24 values for the hour value). As shown in FIG. 2B the first set of time values 206 may be displayed in one or more rows in an ascending order. For example, as shown in FIG. 2B, the first row may include the hour values 0, 1, 2 and 3, the second row may include hour values 4, 5, 6 and 7, and so on. Hour designators "h" may be displayed next to the values. Displaying all of the first set of time values 206 at the same time allows the user to immediately select the desired value from the first set of time values 206 without having to locate the desired value on a portion of the user interface not being displayed on the display 202. Thus, the user does not need to scroll or proceed to a next screen to locate the desired value from the first set of time values 206.

The user may select one of the first set of time values 206. The selection may be made by a user touching the part of the display 202 that corresponds to the desired value from the first set of time values 206. One or more of the first set of the values 206 may be omitted or deactivated, such that the user may not be able to select the deactivated values, when the application makes a determination that one or more values should not be selected by the user. For example, if the user interface is displaying available times for which a user is available to perform a task, only the hour during which the user works may be displayed or activated for selection.

In response to the user making a selection from the first set of time values 206, the user interface may display a second set of time values 208. The second set of time values may correspond to minute values. As shown in FIG. 2C, the second set of time values 208 may be displayed below the row including the selected first time value 206. The second set of time values 208 may slide down below the row including the selected first time value after a selection is made from the first set of time values 206. The second set of time values 208 may be displayed in one or more rows in an ascending order. For example, as shown in FIG. 2C, the first row of the second set of time values 208 may include the minute values 00, 05, 10, 15, 20 and 25, and the second row of the second set of time values 208 may include minute values 30, 35, 40, 45, 50 and 55.

As shown in FIG. 2C, the second set of time values 208 may be displayed with predefined increments. For example, the second set of time values 208 may be displayed in five second increments. In another embodiment (not shown in FIGS. 2A-2G), all of the minute values may be displayed. Displaying all of the second set of time values 208 at the same time, either with predefined increments or without the increments, allows the user to immediately select the desired value from the second set of time values 208 without having to locate (e.g., by scrolling) the desired value on a portion of the user interface not displayed on the display 202. Thus, the user does not need to scroll or proceed to a next screen to locate the desired value from the second set of time values 208.

The predefined increments in which the second set of time values 208 are displayed may be changed based on the application for which the user interface is used. For example, if the time-related data is being entered for billing purposes, which are billed at ten minute increments, the predefined increments of the second set of time values 208 may be set to ten minutes.

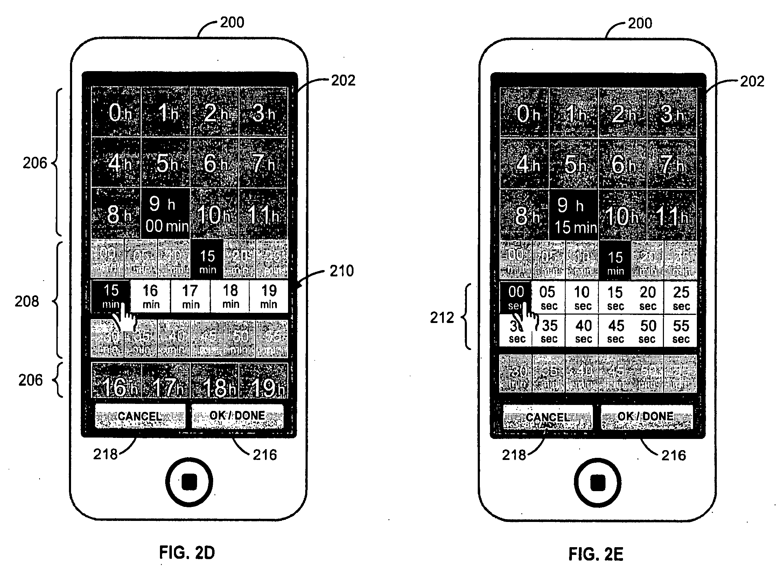

In one embodiment shown in FIG. 2D, if the second set of time values 208 are shown with the predefined increments, the user interface may provide a subset of the second set of time values 210 with values corresponding to the values in the selected incremented value from the second set of time values 208. The subset of the second set of time values 210 may be displayed in response to a selection of one of the second set of time values 208. For example, as shown in FIG. 2D, if the minute value 15 is selected from the second set of time values 208, the subset of second set of time values 210 may be displayed below the row including the selected value providing the minute values 15, 16, 17, 18 and 19. The subset of the second set of time values 210 may be provided in one or more rows below the row including the selected value from the second set of time values 208. Thus, after selecting the incremented minute value 15, the user may have an option to further select the exact minute value from the subset of second set of time values 210.

The user may select one of the second set of time values 208 and/or the subset of second set of time values 208. The selection may be made by a user touching the part of the display 202 that corresponds to the desired second set value 208 and/or a desired subset of the second set of time values 210. While the second set of time values 208 are displayed, the user may also select one of the displayed first set of time values 206, if a change needs to be made to the selected value from the first set of time values 206. In one embodiment, the size of the first set of time values 208 may be reduced such that all of the values from the first set of time values 206 and the second set of time values 208 are visible in the display 202. Providing a subset of the second set of time values 210 is optional and may be provided when the application needs the time-related data accuracy provided by the subset of the second set of time values 210. Whether to provide the second set of time values 210 may be determined automatically by the application or by the user changing the settings in the application.

In one embodiment, in response to the user making a selection from the second set of time values 208, the user interface may display a third set of time values 212. The third set of time values 212 may correspond to second values. As shown in FIG. 2E, the third set of time values 212 may be displayed below the row including the selected value from the second time value 208. The third set of time values 212 may be displayed in one or more rows in an ascending order. As discussed above with regard to the second set of time values 208, the third set of time values may be provided with predefined increments or showing all of the values. For example, as shown in FIG. 2E, the first row of the second set of time values 212 may include the second values 00, 05, 10, 15, 20 and 25, and the second row of the third set of time values 212 may include second values 30, 35, 40, 45, 50 and 55.

The user may select one of the third set of time values 212. The selection may be made by a user touching the part of the display 202 that correspond to the desired third set value 212. Because some applications do not need the values of the seconds for a time-related data, providing the third set of time values 212 in the user interface may be optional. Whether to provide the third set of time values 212 may be determined automatically by the application or by the user changing the settings in the application.

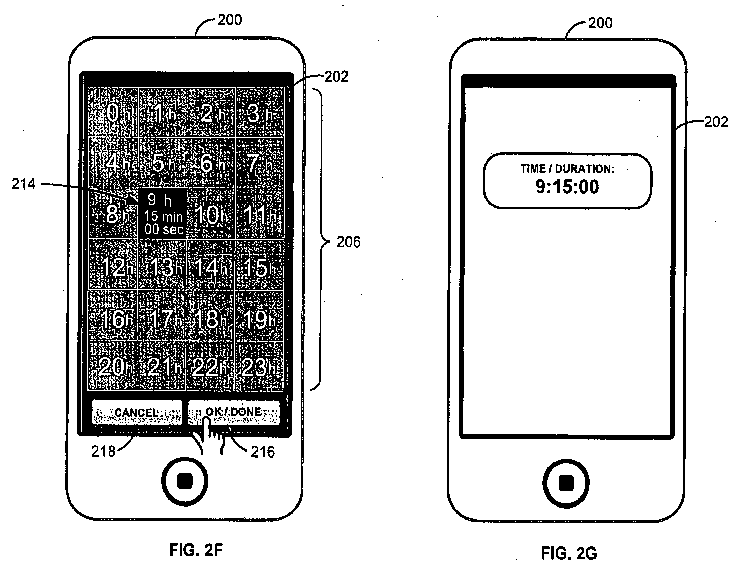

After the selections are made from the second set of time values 208, the subset of the second set of time values 210 and/or the third set of time values 212, the user interface may display the selected values of the time-related data 214. As shown in FIG. 2F, the selected values of the time-related data 214, may be displayed as part of the first set of time values 206. If the displayed value 214 corresponds to the desired value of the user, the user may select a completion command 216 (e.g., OK or DONE command) to provide the selected value 214 to the application. As shown in FIG. 2G the selected time or duration is provided to the application being executed on the client device 200. If, the value does not correspond to the desired value of the user, the user may repeat the selection process by selecting one of the first set of time values 206.

The user interface may provide the completion command 216 (e.g., OK or DONE command) to allow the user to provide the selected value to the application at any time. The completion command 216 may be provided as soon as the user interface is displayed to the user. By selecting the completion command 216 the current value of the time-related data may be provided to the application, without the user making a selection from all of the available sets of time values (e.g., second set of time values 208 and/or third set of time values 212). When the completion command 216 is selected, the default values may be provided for the sets of values for which a selection has not been made. For example, after the 9 hour is selected from the first set of time values 206 and the completion command 216 is selected, the default value of 00 for the second set of time values 208 and the default value of 00 for the third set of time values 212 may be provided to the application.

The user may exit out of the user interface without providing time-related data to the application at any time by selecting a cancel command 218.

While in FIGS. 2B-2E, the user interface to select the time-related data is shown taking up the whole display of the client device 200, a portion of the display may be utilized to display the user interface. The portion of the display used to display the available values may be changed based on the selections of the user or based on other applications being executed by the client device 200. Horizontal and/or vertical orientation of the client device 200 may be used to display the user interface and the available time values for selection. The orientation of the user interface may be changed when the orientation of the client device 200 changes. The arrangement and/or size of the first, second or third time values 206, 208, 212 may be changed based on the orientation of the user interface and/or the available space to display the user interface on the display 202.

The embodiments discussed above should not be limited by the embodiments shown in the figures and may be applied to other data entries. The embodiments discussed above may be applied to other time variables such as, date, month and/or year. Additional sets of time values may be added to the above embodiments to represent the date, month and/or year.

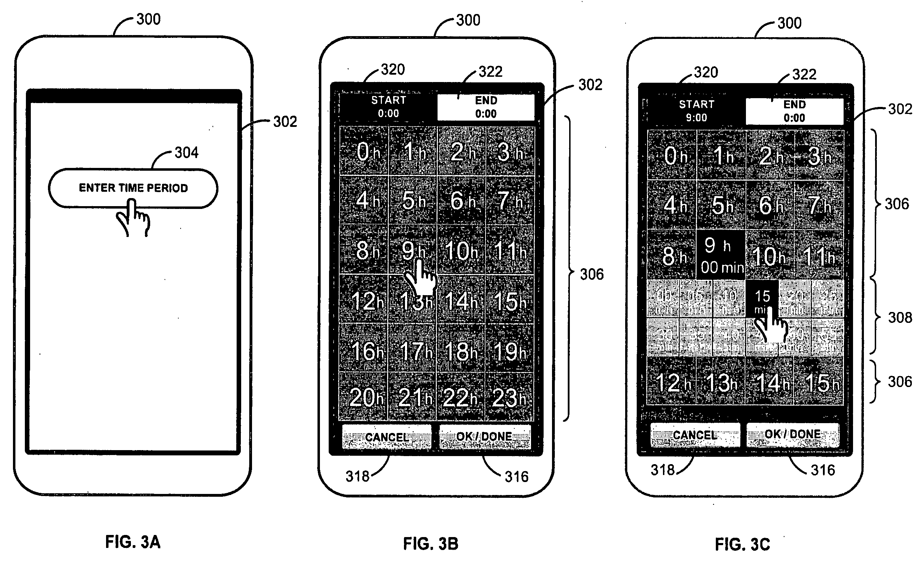

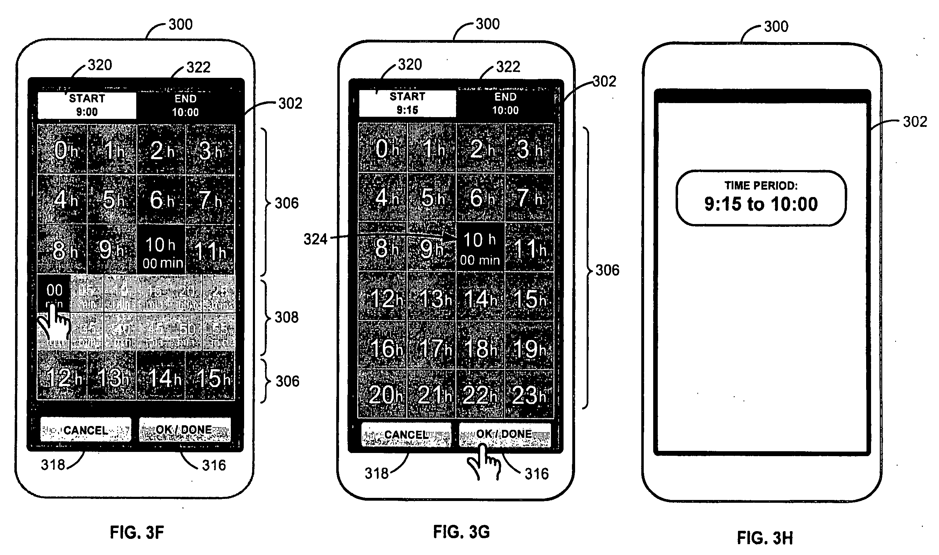

FIGS. 3A-3H illustrate a client device 300 displaying a user interface for entering time-related data according to another embodiment of the present disclosure. The user interface illustrated in FIGS. 3A-3H may be part of an application used to enter a time period including a start time and an end time. The client device 300 may include a display 302 to display the user interface. The display 302 may be a touch-screen capable of displaying a touch-enabled user interface, but is not so limited.

The user interface may be used to enter a start time and an end time. For each time, the user interface may display a first set of time values 306 and a second set of time values 308. The user may select a value from each of the sets of values to define the start time and the end time. All of the first set of time values 306 may be displayed at the same time within the display 302. Similarly, all of the second set of time values 308 may be displayed at the same time within the display 302. After the value from the first set of time values 306 is selected, the second set of time values 308 may be displayed to allow the user to select one of the values from the second set of time values 308. The second set of time values 308 may be displayed below the selected value from the first set of time value. The selected values from the first set of time values 306 and the second set of time values 308 may be provided to the application for the start time and similarly for the end time.

The user interface shown in FIG. 3A-3H reduces the time needed by a user to search, enter and change the time-related data entries. The time may be reduced by allowing all of the values in each of the sets of values (e.g., first set of time values 306 and/or the second set of time values 308) to be displayed to the user at the same time within the display 302. A tap gesture, not requiring a high degree of precise control, may be used to select the desired value from the displayed values. The user interface shown in FIGS. 3A-3H allows for the desired start time and end time to be selected by only using two tap gestures for each time entry (e.g., one for the hour selection and one for the minute selection).

The user interface may be activated in response to a command to enter time-related data. The command may be manually activated by a user selecting a start command 304 to enter the data or may be automatically activated in response to an operation performed by the application (e.g., application finishes processing a preceding data entry). Once the user interface is activated the start time command 320 may be automatically activated. If the start time command 320 is not activated the user may activate the start time by selecting the command 320.

Once the user interface is activated, the user interface may display a first set of time values 306 for the start time. The first set of time values 306 may correspond to hour values. The hour values may be displayed using the standard 12 hour clock system or with the 24 hour clock system. If the 12 hour clock system is used, designators "am" and "pm" could be used to distinguish between hour values for before midday and after midday. The user interface may display all of the available first set time values 306 on the display 302 at the same time (e.g., all 24 values for the hour value). As shown in FIG. 3B the first set of time values 306 may be displayed in one or more rows in an ascending order. For example, as shown in FIG. 3B, the first row may include the hour values 0, 1, 2 and 3, the second row may include hour values 4, 5, 6 and 7, and so on. Hour designators "h" may be displayed next to the values. Displaying all of the first set of time values 306 at the same time allows the user to immediately select the desired value from the first set of time values 306 without having to locate the desired value on a portion of the user interface not being displayed on the display 302. Thus, the user does not need to scroll or proceed to a next screen to locate the desired value from the first set of time values 306.

The user may select one of the values from the first set of time values 306. The selection may be made by a user touching the part of the display 302 (e.g., single tap gesture) that correspond to the desired value from the first set of time values 306.

In response to the user making a selection from the first set of time values 306, the user interface may display a second set of time values 308 for the start time. The second set of time values may correspond to minute values. As shown in FIG. 3C, the second set of time values 308 may be displayed below the row including the selected first time value 306. The second set of time values 308 may slide down below the row including the selected first time value after a selection is made from the first set of time values 306. The second set of time values 308 may be displayed in one or more rows in an ascending order. For example, as shown in FIG. 3C, the first row of the second set of time values 308 may include the minute values 00, 05, 10, 15, 20 and 25, and the second row of the second set of time values 308 may include minute values 30, 35, 40, 45, 50 and 55.

As shown in FIG. 3C, the second set of time values 308 may be displayed with predefined increments (e.g., five second increments). In another embodiment (not shown in FIGS. 3A-3H), all of the minute values may be displayed. Displaying all of the second set of time values 308 at the same time, either with predefined increments or without the increments, allows the user to immediately select the desired value from the second set of time values 308 without having to locate the desired value on a portion of the user interface not displayed on the display 302. Thus, the user does not need to scroll or proceed to a next screen to locate the desired value from the second set of time values 308.

As discussed above with regard to FIG. 2D, if the second set of time values 308 are shown with the predefined increments, the user interface may provide a subset of the second set of time values with values corresponding to the selected incremented selection from the second set of time values 308.

The user may select one of the values of the second set of time values 308. The selection may be made by the user touching the part of the display 302 that correspond to the desired second set value 308. While the second set of time values 308 are displayed, the user may also select one of the displayed first set of time values 308, if a change needs to be made to the selected value from the first set of time values 308. In one embodiment, the size of the first set of time values 308 may be reduced such that all of the values from the first set of time values 306 and the second set of time values 308 are visible in the display 302.

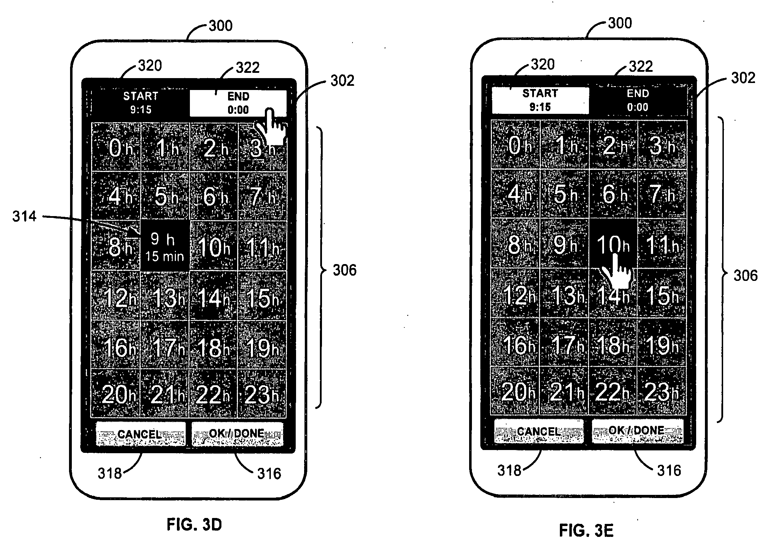

After the selection is made from the first set of time values 306 and/or the second set of time values 308 for the start time, the user interface may update the value displayed in the start time command display 320. As shown in FIG. 3D, the selected value of the time-related data 314, may be displayed as part of the first set of time values 306. If the displayed value 314 corresponds to the desired value of the user, the user may proceed to selecting the end time command display 322.

As shown in FIGS. 3E-3G the selection of the end time may be performed in the same manner as the selection for the start time. After the selection is made from the first set of time values 306 and/or the second set of time values 308 for the end time, the user interface may update the value displayed in the end time command display 322. As shown in FIG. 3G, the selected value of the time-related data 324 may be displayed as part of the first set of time values 306. If the displayed value 324 corresponds to the desired value of the user, the user may select a completion command 316 (e.g., OK or DONE command) to provide the selected start and end time to the application. As shown in FIG. 3H the time period is provided to the application being executed on the client device 300.

If, the values of the start time and/or end time do not correspond to the desired value of the user, the user may repeat the selection process by selecting one of the start time command display 320 or the end time command display 322. Selecting one of the start time command display 320 or the end time command display 322 may restart the selection of the respective time-related data entry.

The user interface may provide the completion command 316 (e.g., OK or DONE command) to allow the user to provide the selected value to the application at any time. The completion command 316 may be provided as soon as the user interface is displayed to the user. By selecting the completion command 316 the current value of the time-related data may be provided to the application, without the user making a selection from all of the available sets of time values (e.g., second set of time values 308). When the completion command 316 is selected, the default values may be provided for the sets of values for which a selection has not been made.

The user may exit out of the user interface without providing time-related data to the application at any time by selecting the cancel command 318.

While not shown in FIGS. 3A-3H, the embodiments shown in FIGS. 3A-3H may include a third set of time values to represent the seconds of the time-related data. Other sets of time values may be included to represent the date, month and/or year.

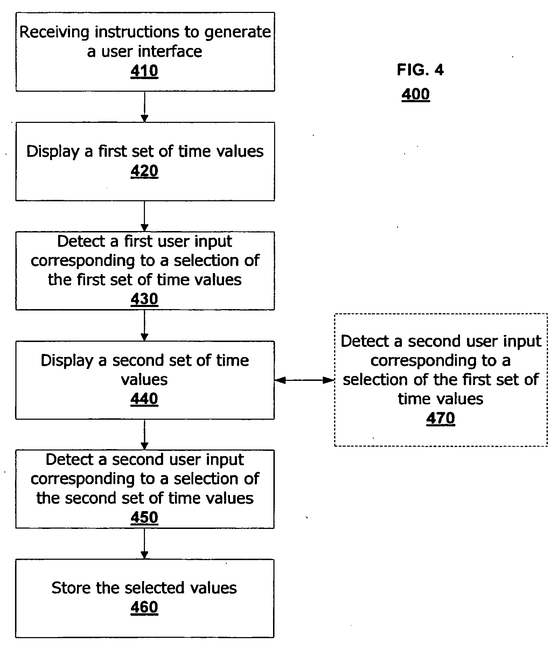

FIG. 4 illustrates a flow diagram of a method 400 for entering time time-related data by a user according to an embodiment of the present disclosure. The method may be implemented on a client device including a touch enabled display. The method may include receiving instructions to generate a user interface 410, displaying a first set of time values 420, detecting a first user input corresponding to a selection of the first set of time values 430, displaying a second set of time values 440, detecting second user input corresponding to a selection of a second set time values 450 and storing the selected values 460.

Receiving instructions to generate a user interface 410 may include receiving the instructions via a touch-enabled user interface. In another embodiment the instructions may be generated automatically by an application completing a preceding task (e.g., completing the entry of a preceding data entry).

Displaying the first set of time values 420 may include displaying the first set of time values in the touch enabled display. The first of time values may be displaying in a plurality of rows and in an ascending order. The first set of time values may represent hour values (e.g., twenty four hour of a clock). All of the values in the first of time values may be displayed in the display at the same time.

Detecting the first user input corresponding to the selection of the first set of time values 430 may include detecting a tab gesture from the user via the touch enabled display, making the selection with a keypad or by other input devices. The first user input may correspond to a single gesture that does not require scrolling to find the desired value from the first set of time values.

Displaying the second set of time values 440 may be performed in response to a selection being made from the first set of time values. The second set of time values may be displayed in one or more rows below a row of the first set of time values including the selected value from the first set of time values. The second set of time values may represent minute values and may be provided in predefined intervals (e.g., 5 minute intervals). The displayed second set of time values may include all of the values in the second set of time values.

Detecting the second user input corresponding to the selection of a second set time values 450 may include detecting a tab gesture from the user via the touch enabled display, making the selection with a keypad or by other input devices. The second user input may correspond to a single gesture that does not require scrolling to find the desired value from the first set of time values.

Storing the selected values 460 may include storing the selected value from the first set of time values and storing the selected value from the second set of time values. The values may be stored in a memory of the client device, an application server or a storage device coupled to the client device or the application server via a network.

In one embodiment, after the second set of time values are displayed, the method may include detecting a second user input corresponding to a selection of the first set of time values 470. A second user input corresponding to a selection of the first set of time values may be performed because when the second set of time values are displayed, at least a portion of the first set of time values are also displayed in the display. In one embodiment, when the second set of time values are displayed, all of the values of the first set of time values are also displayed. If the user makes a second selection of the first set of time values, then the selected value from the first set of time values may be updated and the method may proceed to again display the second set of time values.

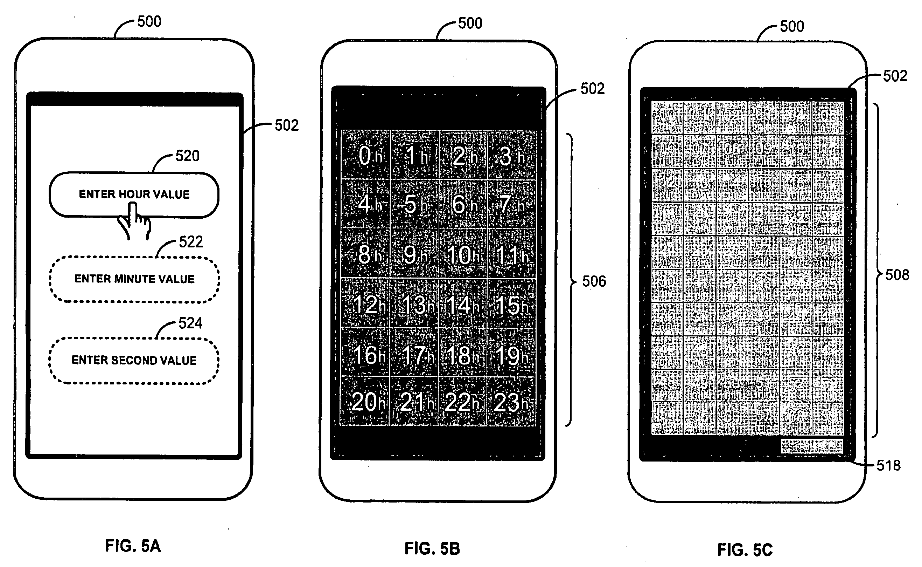

FIGS. 5A-5C illustrate a client device 500 displaying a user interface for entering time-related data according to another embodiment of the present disclosure. The user interface illustrated in FIGS. 5A-5C may be part of an application used to enter a time entry, a time duration, or a time period including a start time and an end time. The client device 500 may include a display 502 to display the user interface. The display 502 may be a touch-screen capable of displaying a touch-enabled user interface, but is not so limited.

The user interface may display a plurality of control 520, 522, 524, to select one of a first set of time values, a second set of time values and/or a third set of time values. The first set of time values may correspond to the hour values, the second set of time values may correspond to the minute values, and the third set of time values may correspond to the second values. Tapping on one of the controls 520, 522, 524 may display the corresponding set of time values. For example, tapping on control 520 may display the first set of time values 506, shown in FIG. 5B. Tapping on control 522 may display the second set of time values 508, shown in FIG. 5C. Tapping on control 524 may display the third set of time values, not shown in FIGS. 5A-5C.

As shown in FIG. 5C, all of the values for the second set of time values 508 may be displayed in the display 502. In one embodiment, all of the time values 506 or 508 may be displayed in the display 502 without displaying the time values for other sets of time values. In one embodiment, a cancel selection 518 may be provided along with the set of time values. Instead of displaying all of the second set of time values 508 at the same time, the values of the second set of time values 508 may be displayed in predefined intervals (e.g., 00, 05, 10, 15, etc.).

In the embodiment shown in FIGS. 5A-5C, in response to the user making a selection from one of the control 520, 522, 524, the corresponding set of time values may be displayed to the user (e.g., displaying the first set of time values 506). After the user makes a selection from the first set of time values, the display of the controls 520, 522 and 524 may be provided to the user. At this point, the user may have an option to make another selection from the control or to repeat the selection to make a correction to a previous selection. If the user does not make a selection from one of the set of time values, a default value may be used for the selection.

In one embodiment, the user may be required to make a selection from the first of time values 506, and the selection from the second set of time values 508, or the third set of time values (not shown in FIGS. 5A-5C) may be optional or made not-available to the user. The application may change which selections form the sets of time values are optional and which selections are required for the user to make.

Some embodiments may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magnetooptical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the disclosure may be implemented using Java, C++, or other object-oriented programming language and development tools. Another embodiment of the disclosure may be implemented in hardwired circuitry in place of, or in combination with machine readable software instructions.

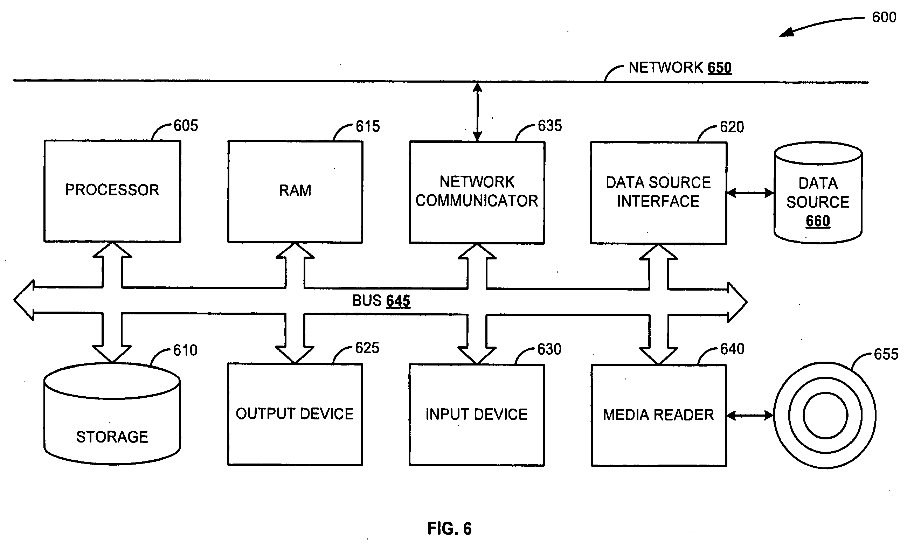

FIG. 6 is a block diagram of an exemplary computer system 600. The computer system 600 includes a processor 605 that executes software instructions or code stored on a computer readable storage medium 655 to perform the above-illustrated methods of the disclosure. The computer system 600 includes a media reader 640 to read the instructions from the computer readable storage medium 655 and store the instructions in storage 610 or in random access memory (RAM) 615. The storage 610 provides a large space for keeping static data where at least some instructions could be stored for later execution. The stored instructions may be further compiled to generate other representations of the instructions and dynamically stored in the RAM 615. The processor 605 reads instructions from the RAM 615 and performs actions as instructed. According to one embodiment of the disclosure, the computer system 600 further includes an output device 625 (e.g., a display) to provide at least some of the results of the execution as output including, but not limited to, visual information to users and an input device 630 to provide a user or another device with means for entering data and/or otherwise interact with the computer system 600. Each of these output devices 625 and input devices 630 could be joined by one or more additional peripherals to further expand the capabilities of the computer system 600. A network communicator 635 may be provided to connect the computer system 600 to a network 650 and in turn to other devices connected to the network 650 including other clients, servers, data stores, and interfaces, for instance. The modules of the computer system 600 are interconnected via a bus 645. Computer system 600 includes a data source interface 620 to access data source 660. The data source 660 can be accessed via one or more abstraction layers implemented in hardware or software. For example, the data source 660 may be accessed by network 650. In some embodiments the data source 660 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

A semantic layer is an abstraction overlying one or more data sources. It removes the need for a user to master the various subtleties of existing query languages when writing queries. The provided abstraction includes metadata description of the data sources. The metadata can include terms meaningful for a user in place of the logical or physical descriptions used by the data source. For example, common business terms in place of table and column names. These terms can be localized and or domain specific. The layer may include logic associated with the underlying data allowing it to automatically formulate queries for execution against the underlying data sources. The logic includes connection to, structure for, and aspects of the data sources. Some semantic layers can be published, so that it can be shared by many clients and users. Some semantic layers implement security at a granularity corresponding to the underlying data sources' structure or at the semantic layer. The specific forms of semantic layers includes data model objects that describe the underlying data source and define dimensions, attributes and measures with the underlying data. The objects can represent relationships between dimension members, provides calculations associated with the underlying data.

In the above description, numerous specific details are set forth to provide a thorough understanding of embodiments of the disclosure. One skilled in the relevant art will recognize, however that the various embodiments can be practiced without one or more of the specific details or with other methods, components, techniques, etc. In other instances, well-known operations or structures are not shown or described in detail to avoid obscuring aspects of the disclosure.

Although the processes illustrated and described herein include series of steps, it will be appreciated that the different embodiments of the present disclosure are not limited by the illustrated ordering of steps, as some steps may occur in different orders, some concurrently with other steps apart from that shown and described herein. In addition, not all illustrated steps may be required to implement a methodology in accordance with the present disclosure. Moreover, it will be appreciated that the processes may be implemented in association with the apparatus and systems illustrated and described herein as well as in association with other systems not illustrated.

The above descriptions and illustrations of embodiments of the disclosure, including what is described in the Abstract, is not intended to be exhaustive or to limit the embodiments to the precise forms disclosed. While specific embodiments of, and examples for, the embodiments are described herein for illustrative purposes, various equivalent modifications are possible within the scope of the disclosure, as those skilled in the relevant art will recognize. These modifications can be made to the embodiments in light of the above detailed description. Rather, the scope of the disclosure is to be determined by the following claims, which are to be interpreted in accordance with established doctrines of claim construction.

## Claims

1. A computer implemented method comprising:
receiving (410) instructions to generate a user interface for entering time-related data;
displaying (420) in the user interface a first set of time values (206, 306) in a plurality of rows, the displayed first set of time values (206, 306) including all of the values in the first set of time values (206, 306);
detecting (430) a user input corresponding to a selection of one of the values from the first set of time values;
in response to the selection of one of the values from the first set of time values (206, 306), displaying (440) in the user interface a second set of time values (208, 308);
detecting (450) a user input corresponding to a selection of one of the values from the second set of time values (208, 308);
storing (460) the selected value from the first set of time values (206, 306) and the selected value from the second set of time values (208, 308),
wherein upon determination that one or more of the first set of time values (206, 306) may not be selected, the one or more of the first set of time values (206, 306) are deactivated such that the deactivated one or more of the first set of time values (206, 306) cannot be selected by a user;
wherein the second set of time values (208, 308) are provided with a predefined increment; and
in response to the selection of one of the values from the second set of time values (208, 308), displaying in the user interface a third set of time values (212) in one or more rows, wherein the third set of time values (212) is a subset of the second set of time values (210) corresponding to the selected value of the second set of time values (210); and
detecting a user input corresponding to a selection of one of the values from the third set of time values (212).

2. The computer implemented method of claim 1, wherein the selection of one of the values from the first set of time values (206, 306) is made by a tap gesture on a touch-enabled user interface and the selection of one of the values from the second set of time values (208, 308) is made by a tap gesture on the touch-enabled user interface.

3. The computer implemented method of claim 1 or claim 2, wherein when the second set of time values (208, 308) are displayed, at least a portion of the first set of time values (206, 306) are displayed and the user selects values from the displayed second set of time values (208, 308) or the displayed first set of time values (206, 306); and/or
wherein the first set of time values (206, 306) represent hour values and the second set of time values (208, 308) represent minute values.

4. The computer implemented method of any one of the preceding claims, wherein the first set of time values (206, 306) are displayed in an ascending order in the plurality of rows;
wherein the second set of time values (208, 308) may be displayed in one or more rows below a row of the first set of time values (206, 306) including the selected value from the first set of time values (206, 306).

5. The computer implemented method of any one of the preceding claims, wherein the selections from the first set of time values (206, 306) and the second set of time values (208, 308) are made to provide one of a time, a duration and a time period including a start time and an end time.

6. A system comprising:
a display for displaying a user interface;
an input device for receiving commands from a user;
a controller configured to:
display in the display a first set of time values (206, 306) in a plurality of rows, the displayed first set of time values (206, 306) in the display including all of the values in the first set of time values (206, 306);
detect a first user input using the input device, the first user input corresponding to a first selection of one of the values from the first set of time values (206, 306);
store the first selected value from the first set of time values (206, 306);
in response to the first selection of one of the values from the first set of time values (206, 306), display in the display a second set of time values (208, 308);
detect a second user input using the input device, the second user input corresponding to a first selection of one of the values from the second set of time values (208, 308);
store the first selected value from the second set of time values (208, 308),
wherein upon determination that one or more of the first set of time values (206, 306) may not be selected, the one or more of the first set of time values (206, 306) are deactivated such that the deactivated one or more of the first set of time values (206, 306) cannot be selected by the user;
wherein the second set of time values (208, 308) are provided with a predefined increment; and
in response to the selection of one of the values from the second set of time values (208, 308), display in the user interface a third set of time values (212) in one or more rows, wherein the third set of time values (212) is a subset of the second set of time values (210) corresponding to selected value of the second set of time values (210); and
detect a user input corresponding to a selection of one of the values from the third set of time values (212).

7. The system of claim 6, wherein the display is a touch screen display and the input device is a touch enabled screen of the touch screen display;
wherein the selection of one of the values from the first set of time values (206, 306) may be made by a first tap gesture on the touch screen display and the selection of one of the values from the second set of time values (208, 308) may be made by a second tap gesture on the touch screen display.

8. The system of claim 6 or claim 7, wherein when the second set of time values (208, 308) are displayed, at least a portion of the first set of time values (206, 306) are displayed and the user selects values from the displayed second set of time values (208, 308) or the displayed first set of time values (206, 306).

9. The system of any one of claims 6 to 8, wherein the first set of time values (206, 306) represent hour values and the second set of time values (208, 308) represent minute values.

10. The system of any one of claims 6 to 9, wherein the first set of time values (206, 306) are displayed in an ascending order in the plurality of rows;
wherein the second set of time values (208, 308) may be displayed in one or more rows below a row of the first set of time values (206, 306) including the selected value from the first set of time values (206, 306).

11. The system of any one of claims 6 to 10, wherein the controller is further configured to:
in response to the first selection of one of the values from the second set of time values (208, 308), display in the display the first set of time values (206, 306);
detect a third user input using the input device, the third user input corresponding to a second selection of one of the values from the first set of time values (206, 306);
store the second selected value from the first set of time values (206, 306);
in response to the second selection of one of the values from the first set of time values (206, 306), display in the display the second set of time values (208, 308);
detect a fourth user input using the input device, the fourth user input corresponding to a second selection of one of the values from the second set of time values (208, 308); and
store the second selected value from the second set of time values (208, 308).

12. The computer implemented method of claim 1, wherein:
the receiving (410) instructions to generate a user interface comprises generating the user interface in a touch-enabled user interface;
wherein the first set of time values (206, 306) represent twenty four hour values;
wherein the user input corresponding to a selection of one of the values from the first set of time values is a first tap gesture from the user, the first tap gesture corresponding to a first selection of one of the values from the first set of time values;
wherein the second set of time values (208, 308) is displayed in one or more rows below a row of the first set of time values (206, 306) including the selected value from the first set of time values (206, 306), the second set of time values (208, 308) representing minute values and the displayed second set of time values (208, 308) including all of the values in the second set of time values (208, 308);
wherein the user input corresponding to a selection of one of the values from the second set of time values is a second tap gesture from the user, the second tap gesture corresponding to one of a first selection of one of the values from the second set of time values (208, 308) and a second selection of one of the values from the first set of time values (206, 306);
if the second tap gesture corresponds to the second selection of one of the values from the first set of time values (206, 306),
displaying in the user interface the second set of time values (208, 308) in one or more rows below a row of the first set of time values (206, 306) including the second selected value from the first set of time values (206, 306); and
if the second tap gesture corresponds to the first selection of one of the values from the second set of time values (208, 308), storing the selected values from the first set of time values (206, 306) and the second set of time values (208, 308).

## Patentansprüche

1. Ein computerimplementiertes Verfahren, das Folgendes umfasst:
empfangen (410) von Anweisungen zur Erzeugung einer Benutzerschnittstelle zur Eingabe von zeitbezogenen Daten (*time-related data*);
anzeigen (420) in der Benutzerschnittstelle eines ersten Satzes von Zeitwerten (206, 306) in einer Vielzahl an Zeilen, wobei der angezeigte erste Satz von Zeitwerten (206, 306) alle Werte im ersten Satz von Zeitwerten (206, 306) enthält;
erfassen (430) eines Benutzereingangs, der einer Auswahl von einem der Werte aus dem ersten Satz von Zeitwerten entspricht:
als Antwort auf die Auswahl von einem der Werte aus dem ersten Satz von Zeitwerten (206, 306), anzeigen (440) in der Benutzerschnittstelle eines zweiten Satzes von Zeitwerten (208, 308);
erfassen (450) eines Benutzereingangs, der einer Auswahl von einem der Werte aus dem zweiten Satz von Zeitwerten (208, 308) entspricht;
speichern (460) des ausgewählten Wertes aus dem ersten Satz von Zeitwerten (206, 306) und des gewählten Wertes aus dem zweiten Satz von Zeitwerten (208, 308),
wobei bei der Feststellung, dass ein oder mehrere Werte aus dem ersten Satz an Zeitwerten (206, 306) nicht ausgewählt werden können, der eine oder die mehreren Werte aus dem ersten Satz an Zeitwerten (206, 306) deaktiviert werden, sodass der eine oder die mehreren deaktivierten Werte aus dem ersten Satz an Zeitwerten (206, 306) von einem Benutzer nicht ausgewählt werden können;
wobei der zweite Satz von Zeitwerten (208, 308) über ein vorbestimmtes Inkrement verfügen; und
als Antwort auf die Auswahl von einem der Werte aus dem zweiten Satz von Zeitwerten (208, 308), anzeigen in der Benutzerschnittstelle eines dritten Satzes von Zeitwerten (212) in einer oder in mehreren Zeilen, wobei der dritte Satz von Zeitwerten (212) eine Teilmenge des zweiten Satzes von Zeitwerten (210) ist, der dem ausgewählten Wert des zweiten Satzes von Zeitwerten (210) entspricht; und
erfassen eines Benutzereingangs, der einer Auswahl von einem der Werte aus dem dritten Satz von Zeitwerten (212) entspricht.

2. Das computerimplementierte Verfahren nach Anspruch 1, wobei das Auswählen von einem der Werte aus dem ersten Satz an Zeitwerten (206, 306) durch eine Antipp-Geste (*tap gesture*) auf einer berührungsbefähigten Benutzerschnittstelle erfolgt, und das Auswählen von einem der Werte aus dem zweiten Satz an Zeitwerten (208, 308) durch eine Antipp-Geste auf einer berührungsbefähigten Benutzerschnittstelle erfolgt.

3. Das computerimplementierte Verfahren nach Anspruch 1 oder 2, wobei, wenn der zweite Satz von Zeitwerten (208, 308) angezeigt wird, mindestens ein Abschnitt des ersten Satzes von Zeitwerten (206, 306) angezeigt wird, und der Benutzer wählt Werte aus dem angezeigten zweiten Satz von Zeitwerten (208, 308) oder aus dem angezeigten ersten Satz an Zeitwerten (206, 306) aus; und/oder
wobei der erste Satz an Zeitwerten (206, 306) Stundenwerte und der zweite Satz von Zeitwerten (208, 308) Minutenwerte darstellt.

4. Das computerimplementierte Verfahren nach irgendeinem der vorhergehenden Ansprüche, wobei der erste Satz an Zeitwerten (206, 306) in der Vielzahl an Zeilen in aufsteigender Reihenfolge angezeigt wird;
wobei der zweite Satz von Zeitwerten (208, 308) in einer oder mehreren Zeilen unterhalb einer Zeile des ersten Satz an Zeitwerten (206, 306) angezeigt werden kann, die den ausgewählten Wert aus dem ersten Satz an Zeitwerten (206, 306) enthält.

5. Das computerimplementierte Verfahren nach irgendeinem der vorhergehenden Ansprüche, wobei die Auswahlen aus dem ersten Satz von Zeitwerten (206, 306) und aus dem zweiten Satz von Zeitwerten (208, 308) erfolgen, um einen der Folgenden bereitzustellen: eine Zeit, eine Dauer und eine Zeitperiode einschließlich einer Startzeit und einer Endzeit.

6. Ein System, das Folgendes umfasst:
eine Anzeige, um eine Benutzerschnittstelle anzuzeigen;
eine Eingabevorrichtung, um Anweisungen von einem Benutzer zu empfangen;
eine Steuerung, die zu Folgendem konfiguriert ist:
anzeigen in der Anzeige eines ersten Satzes von Zeitwerten (206, 306) in einer Vielzahl an Zeilen, wobei der angezeigte erste Satz von Zeitwerten (206, 306) in der Anzeige alle Werte im ersten Satz von Zeitwerten (206, 306) enthält;
erfassen eines ersten Benutzereingangs unter Verwendung der Eingabevorrichtung, wobei der erste Benutzereingang einer ersten Auswahl von einem der Werte aus dem ersten Satz von Zeitwerten (206, 306) entspricht;
speichern des ersten ausgewählten Wertes aus dem ersten Satz von Zeitwerten (206, 306);
als Antwort auf die erste Auswahl von einem der Werte aus dem ersten Satz von Zeitwerten (206, 306), anzeigen in der Anzeige eines zweiten Satzes von Zeitwerten (208, 308);
erfassen eines zweiten Benutzereingangs unter Verwendung der Eingabevorrichtung, wobei der zweite Benutzereingang einer ersten Auswahl von einem der Werte aus dem zweiten Satz von Zeitwerten (208, 308) entspricht;
speichern des ersten ausgewählten Wertes aus dem zweiten Satz von Zeitwerten (208, 308),
wobei bei der Feststellung, dass ein oder mehrere Werte aus dem ersten Satz an Zeitwerten (206, 306) nicht ausgewählt werden können, der eine oder die mehreren Werte aus dem ersten Satz an Zeitwerten (206, 306) deaktiviert werden, sodass der eine oder die mehreren deaktivierten Werte aus dem ersten Satz an Zeitwerten (206, 306) vom Benutzer nicht ausgewählt werden können;
wobei der zweite Satz von Zeitwerten (208, 308) über ein vorbestimmtes Inkrement verfügen; und
als Antwort auf die Auswahl von einem der Werte aus dem zweiten Satz von Zeitwerten (208, 308), anzeigen in der Benutzerschnittstelle eines dritten Satzes von Zeitwerten (212) in einer oder in mehreren Zeilen, wobei der dritte Satz von Zeitwerten (212) eine Teilmenge des zweiten Satzes von Zeitwerten (210) ist, der dem ausgewählten Wert des zweiten Satzes von Zeitwerten (210) entspricht; und
erfassen eines Benutzereingangs, der einer Auswahl von einem der Werte aus dem dritten Satz von Zeitwerten (212) entspricht.

7. Das System nach Anspruch 6, wobei die Anzeigeeinrichtung eine berührungsempfindliche Anzeigeeinrichtung ist und die Eingabevorrichtung ein berührungsbefähigter Schirm der berührungsempfindlichen Anzeigeeinrichtung ist;
wobei das Auswählen von einem der Werte aus dem ersten Satz an Zeitwerten (206, 306) durch eine erste Antipp-Geste (*tap gesture*) auf der berührungsbefähigten Anzeigeeinrichtung erfolgen kann, und das Auswählen von einem der Werte aus dem zweiten Satz an Zeitwerten (208, 308) durch eine zweite Antipp-Geste auf einer berührungsbefähigten Anzeigeeinrichtung erfolgen kann.

8. Das System nach Anspruch 6 oder 7, wobei wenn der zweite Satz von Zeitwerten (208, 308) angezeigt wird, mindestens ein Abschnitt des ersten Satzes von Zeitwerten (206, 306) angezeigt wird, und der Benutzer wählt Werte aus dem angezeigten zweiten Satz von Zeitwerten (208, 308) oder aus dem angezeigten ersten Satz an Zeitwerten (206, 306) aus.

9. Das System nach irgendeinem der Ansprüche von 6 bis 8, wobei der erste Satz an Zeitwerten (206, 306) Stundenwerte und der zweite Satz von Zeitwerten (208, 308) Minutenwerte darstellt.

10. Das System nach irgendeinem der Ansprüche von 6 bis 9, wobei der erste Satz an Zeitwerten (206, 306) in der Vielzahl an Zeilen in aufsteigender Reihenfolge angezeigt wird;
wobei der zweite Satz von Zeitwerten (208, 308) in einer oder mehreren Zeilen unterhalb einer Zeile des ersten Satz an Zeitwerten (206, 306) angezeigt werden kann, die den ausgewählten Wert aus dem ersten Satz an Zeitwerten (206, 306) enthält.

11. Das System nach irgendeinem der Ansprüche von 6 bis 10, wobei die Steuerung des Weiteren zu Folgendem konfiguriert ist:
als Antwort auf die erste Auswahl von einem der Werte aus dem zweiten Satz von Zeitwerten (208, 308), anzeigen in der Anzeige eines ersten Satzes von Zeitwerten (206, 306);
erfassen eines dritten Benutzereingangs unter Verwendung der Eingabevorrichtung, wobei der dritte Benutzereingang einer zweiten Auswahl von einem der Werte aus dem ersten Satz von Zeitwerten (206, 306) entspricht;
speichern des zweiten ausgewählten Wertes aus dem ersten Satz von Zeitwerten (206, 306),
als Antwort auf die zweite Auswahl von einem der Werte aus dem ersten Satz von Zeitwerten (206, 306), anzeigen in der Anzeige des zweiten Satzes von Zeitwerten (208, 308);
erfassen eines vierten Benutzereingangs unter Verwendung der Eingabevorrichtung, wobei der vierte Benutzereingang einer zweiten Auswahl von einem der Werte aus dem zweiten Satz von Zeitwerten (208, 308) entspricht; und
speichern des zweiten ausgewählten Wertes aus dem zweiten Satz von Zeitwerten (208, 308).

12. Das computerimplementierte Verfahren nach Anspruch 1, wobei:
das Empfangen (410) von Anweisungen zur Erzeugung einer Benutzerschnittstelle das Erzeugen der Benutzerschnittstelle in einer berührungsbefähigten Benutzerschnittstelle umfasst;
wobei der erste Satz von Zeitwerten (206, 306) vierundzwanzig Stundenwerte darstellt;
wobei die Benutzereingabe, die einem Auswählen von einem der Werte aus dem ersten Satz an Zeitwerten entspricht, eine erste Antipp-Geste vonseiten des Benutzers ist, wobei die erste Antipp-Geste einer ersten Auswahl von einem der Werte aus dem ersten Satz von Zeitwerten entspricht;
wobei der zweite Satz von Zeitwerten (208, 308) in einer oder mehreren Zeilen unterhalb einer Zeile des ersten Satz an Zeitwerten (206, 306) angezeigt wird, die den ausgewählten Wert aus dem ersten Satz an Zeitwerten (206, 306) enthält, wobei der zweite Satz von Zeitwerten (208, 308) Minutenwerte darstellt und der angezeigte zweite Satz von Zeitwerten (208, 308) alle Werte im zweiten Satz von Zeitwerten (208, 308) enthält;
wobei die Benutzereingabe, die einem Auswählen von einem der Werte aus dem zweiten Satz an Zeitwerten entspricht, eine zweite Antipp-Geste vonseiten des Benutzers ist, wobei die zweite Antipp-Geste einer ersten Auswahl von einem der Werte aus dem zweiten Satz von Zeitwerten (208, 308) und einer zweiten Auswahl von einem der Werte aus dem ersten Satz von Zeitwerten (206, 306) entspricht;
falls die zweite Antipp-Geste der zweiten Auswahl von einem der Werte aus dem ersten Satz von Zeitwerten (206, 306) entspricht,
anzeigen in der Benutzerschnittstelle den zweiten Satz von Zeitwerten (208, 308) in einer oder mehreren Zeilen unterhalb einer Zeile des ersten Satz an Zeitwerten (206, 306), die den zweiten ausgewählten Wert aus dem ersten Satz an Zeitwerten (206, 306) enthält; und
falls die zweite Antipp-Geste der ersten Auswahl von einem der Werte aus dem zweiten Satz von Zeitwerten (208, 308) entspricht, speichern der ausgewählten Werte aus dem ersten Satz von Zeitwerten (206, 306) und dem zweiten Satz von Zeitwerten (208, 308).

## Revendications

1. Un procédé mis en oeuvre par ordinateur, comprenant le fait de :
recevoir (410) des instructions pour générer une interface utilisateur permettant d'entrer des données relatives au temps ;
afficher (420) dans l'interface utilisateur un premier ensemble de valeurs temporelles (206, 306) dans une pluralité de rangées, le premier ensemble de valeurs temporelles (206, 306) affiché incluant toutes les valeurs présentes dans le premier ensemble de valeurs temporelles (206, 306) ;
détecter (430) une entrée d'utilisateur correspondant à une sélection d'une des valeurs parmi le premier ensemble de valeurs temporelles ;
en réponse à la sélection d'une des valeurs parmi le premier ensemble de valeurs temporelles (206, 306), afficher (440) dans l'interface utilisateur un deuxième ensemble de valeurs temporelles (208, 308) ;
détecter (450) une entrée d'utilisateur correspondant à une sélection d'une des valeurs parmi le deuxième ensemble de valeurs temporelles (208, 308) ;
stocker (460) la valeur sélectionnée parmi le premier ensemble de valeurs temporelles (206, 306) et la valeur sélectionnée parmi le deuxième ensemble de valeurs temporelles (208, 308),
sachant que lorsqu'il est déterminé qu'une ou plusieurs parmi le premier ensemble de valeurs temporelles (206, 306) ne peuvent pas être sélectionnées, cette ou ces valeurs parmi le premier ensemble de valeurs temporelles (206, 306) sont désactivées, de manière que cette ou ces valeurs désactivées parmi le premier ensemble de valeurs temporelles (206, 306) ne peuvent pas être sélectionnées par un utilisateur ;
sachant que le deuxième ensemble de valeurs temporelles (208, 308) sont fournies avec un incrément prédéfini ; et
en réponse à la sélection d'une des valeurs parmi le deuxième ensemble de valeurs temporelles (208, 308), afficher dans l'interface utilisateur un troisième ensemble de valeurs temporelles (212) en une ou plusieurs rangées, sachant que le troisième ensemble de valeurs temporelles (212) est un sous-ensemble du deuxième ensemble de valeurs temporelles (210) correspondant à la valeur sélectionnée parmi le deuxième ensemble de valeurs temporelles (210) ; et
détecter une entrée d'utilisateur qui correspond à une sélection d'une des valeurs du troisième ensemble de valeurs temporelles (212).

2. Le procédé mis en oeuvre par ordinateur d'après la revendication 1, sachant que la sélection d'une des valeurs parmi le premier ensemble de valeurs temporelles (206, 306) est effectuée par un geste de frappe sur une interface utilisateur à commande tactile activée et que la sélection d'une des valeurs parmi le deuxième ensemble de valeurs temporelles (208, 308) est effectuée par un geste de frappe sur l'interface utilisateur à commande tactile activée.

3. Le procédé mis en oeuvre par ordinateur d'après la revendication 1 ou 2, sachant que quand le deuxième ensemble de valeurs temporelles (208, 308) est affiché, au moins une portion du premier ensemble de valeurs temporelles (206, 306) est affichée, et qu'un utilisateur sélectionne des valeurs parmi le deuxième ensemble de valeurs temporelles (208, 308) affiché ou parmi le premier ensemble de valeurs temporelles (206, 306) affiché ; et/ou
sachant que le premier ensemble de valeurs temporelles (206, 306) représente des valeurs *heure* et que le deuxième ensemble de valeurs temporelles (208, 308) représente des valeurs *minute.*

4. Le procédé mis en oeuvre par ordinateur d'après une des revendications précédentes, sachant que le premier ensemble de valeurs temporelles (206, 306) est affiché dans un ordre croissant dans la pluralité de rangées ;
sachant que le deuxième ensemble de valeurs temporelles (208, 308) peut être affiché dans une ou plusieurs rangées au-dessous d'une rangée du premier ensemble de valeurs temporelles (206, 306) incluant la valeur sélectionnée parmi le premier ensemble de valeurs temporelles (206, 306).

5. Le procédé mis en oeuvre par ordinateur d'après une des revendications précédentes, sachant que les sélections opérées parmi le premier ensemble de valeurs temporelles (206, 306) et le deuxième ensemble de valeurs temporelles (208, 308) sont effectuées pour fournir un des suivants : un horaire, une durée et une période de temps y compris un horaire de départ et un horaire final.

6. Un système comprenant :
une affiche pour afficher une interface utilisateur ;
un dispositif d'entrée pour recevoir des instructions d'un utilisateur ;
une dispositif de commande configuré pour :
afficher dans l'affichage un premier ensemble de valeurs temporelles (206, 306) dans une pluralité de rangées, le premier ensemble de valeurs temporelles (206, 306) affiché dans l'affichage incluant toutes les valeurs présentes dans le premier ensemble de valeurs temporelles (206, 306) ;
détecter une première entrée d'utilisateur utilisant le dispositif d'entrée, la première entrée d'utilisateur correspondant à une première sélection d'une des valeurs parmi le premier ensemble de valeurs temporelles (206, 306) ;
stocker la première valeur sélectionnée parmi le premier ensemble de valeurs temporelles (206, 306) ;
en réponse à la première sélection d'une des valeurs parmi le premier ensemble de valeurs temporelles (206, 306), afficher dans l'affichage un deuxième ensemble de valeurs temporelles (208, 308) ;
détecter une deuxième entrée d'utilisateur utilisant le dispositif d'entrée, la deuxième entrée d'utilisateur correspondant à une première sélection d'une des valeurs parmi le deuxième ensemble de valeurs temporelles (208, 308) ;
stocker la première valeur sélectionnée parmi le deuxième ensemble de valeurs temporelles (208, 308),
sachant que lorsqu'il est déterminé qu'une ou plusieurs parmi le premier ensemble de valeurs temporelles (206, 306) ne peuvent pas être sélectionnées, cette ou ces valeurs parmi le premier ensemble de valeurs temporelles (206, 306) sont désactivées, de manière que cette ou ces valeurs désactivées parmi le premier ensemble de valeurs temporelles (206, 306) ne peuvent pas être sélectionnées par un utilisateur ;
sachant que le deuxième ensemble de valeurs temporelles (208, 308) sont fournies avec un incrément prédéfini ; et
en réponse à la sélection d'une des valeurs parmi le deuxième ensemble de valeurs temporelles (208, 308), afficher dans l'interface utilisateur un troisième ensemble de valeurs temporelles (212) en une ou plusieurs rangées, sachant que le troisième ensemble de valeurs temporelles (212) est un sous-ensemble du deuxième ensemble de valeurs temporelles (210) correspondant à la valeur sélectionnée parmi le deuxième ensemble de valeurs temporelles (210) ; et
détecter une entrée d'utilisateur qui correspond à une sélection d'une des valeurs du troisième ensemble de valeurs temporelles (212).

7. Le système d'après la revendication 6, sachant que l'affichage est un affichage à écran tactile et que le dispositif d'entrée est un écran à commande tactile activée de l'affichage à écran tactile ;
sachant que la sélection d'une des valeurs parmi le premier ensemble de valeurs temporelles (206, 306) peut être effectuée par un premier geste de frappe sur l'affichage à écran tactile et que la sélection d'une des valeurs parmi le deuxième ensemble de valeurs temporelles (208, 308) peut être effectuée par un deuxième geste de frappe sur l'affichage à écran tactile.

8. Le système d'après les revendications 6 ou 7, sachant que quand le deuxième ensemble de valeurs temporelles (208, 308) est affiché, au moins une portion du premier ensemble de valeurs temporelles (206, 306) est affichée, et que le utilisateur sélectionne des valeurs parmi le deuxième ensemble de valeurs temporelles (208, 308) affiché ou parmi le premier ensemble de valeurs temporelles (206, 306) affiché.

9. Le système d'après une quelconques des revendications de 6 à 8, sachant que le premier ensemble de valeurs temporelles (206, 306) représente des valeurs *heure* et que le deuxième ensemble de valeurs temporelles (208, 308) représente des valeurs *minute.*

10. Le système d'après une quelconques des revendications de 6 à 9,
sachant que le premier ensemble de valeurs temporelles (206, 306) est affiché dans un ordre croissant dans la pluralité de rangées ;
sachant que le deuxième ensemble de valeurs temporelles (208, 308) peut être affiché dans une ou plusieurs rangées au-dessous d'une rangée du premier ensemble de valeurs temporelles (206, 306) incluant la valeur sélectionnée parmi le premier ensemble de valeurs temporelles (206, 306).

11. Le système d'après une quelconques des revendications de 6 à 10, sachant que le dispositif de commande est en outre configuré pour :
en réponse à la première sélection d'une des valeurs parmi le deuxième ensemble de valeurs temporelles (208, 308), afficher dans l'affichage le premier ensemble de valeurs temporelles (206, 306) ;
détecter une troisième entrée d'utilisateur utilisant le dispositif d'entrée, la troisième entrée d'utilisateur correspondant à une deuxième sélection d'une des valeurs parmi le premier ensemble de valeurs temporelles (206, 306) ;
stocker la deuxième valeur sélectionnée parmi le premier ensemble de valeurs temporelles (206, 306) ;
en réponse à la deuxième sélection d'une des valeurs parmi le premier ensemble de valeurs temporelles (206, 306), afficher dans l'affichage le deuxième ensemble de valeurs temporelles (208, 308) ;
détecter une quatrième entrée d'utilisateur utilisant le dispositif d'entrée, la quatrième entrée d'utilisateur correspondant à une deuxième sélection d'une des valeurs parmi le deuxième ensemble de valeurs temporelles (208, 308) ; et
stocker la deuxième valeur sélectionnée parmi le deuxième ensemble de valeurs temporelles (208, 308).

12. Le procédé mis en oeuvre par ordinateur d'après la revendication 1, sachant que le fait de :
recevoir (410) des instructions servant à générer une interface utilisateur comprend le fait de générer l'interface utilisateur dans une interface utilisateur à commande tactile activée ;
sachant que le premier ensemble de valeurs temporelles (206, 306) représente des valeurs correspondant aux vingt-quatre heures ;
sachant que l'entrée d'utilisateur correspondant à une sélection d'une des valeurs parmi le premier ensemble de valeurs temporelles est un premier geste de frappe de la part de l'utilisateur, le premier geste de frappe correspondant à une première sélection d'une des valeurs parmi le premier ensemble de valeurs temporelles ;
sachant que le deuxième ensemble de valeurs temporelles (208, 308) est affiché dans une ou plusieurs rangées au-dessous d'une rangée du premier ensemble de valeurs temporelles (206, 306) incluant la valeur sélectionnée parmi le premier ensemble de valeurs temporelles (206, 306), le deuxième ensemble de valeurs temporelles (208, 308) représentant les valeurs minute et le deuxième ensemble de valeurs temporelles (208, 308) affiché incluant toutes les valeurs dans le deuxième ensemble de valeurs temporelles (208, 308) ;
sachant que l'entrée d'utilisateur correspondant à une sélection d'une des valeurs parmi le deuxième ensemble de valeurs temporelles est un deuxième geste de frappe de la part de l'utilisateur, le deuxième geste de frappe correspondant à une parmi une première sélection d'une des valeurs parmi le deuxième ensemble de valeurs temporelles (208, 308) et une deuxième sélection d'une des valeurs parmi le premier ensemble de valeurs temporelles (206, 306) ;
si le deuxième geste de frappe correspond à la deuxième sélection d'une des valeurs parmi le premier ensemble de valeurs temporelles (206, 306),
afficher dans l'interface utilisateur le deuxième ensemble de valeurs temporelles (208, 308) dans une ou plusieurs rangées au-dessous d'une rangée du premier ensemble de valeurs temporelles (206, 306) incluant la deuxième valeur sélectionnée parmi le premier ensemble de valeurs temporelles (206, 306) ; et
si le deuxième geste de frappe correspond à la première sélection d'une des valeurs parmi le deuxième ensemble de valeurs temporelles (208, 308), stocker les valeurs sélectionnées parmi le premier ensemble de valeurs temporelles (206, 306) et parmi le deuxième ensemble de valeurs temporelles (208, 308).
